# EUROPÄISCHE PATENTSCHRIFT

(11) **EP 1 604 110 B1**
(45) Veröffentlichungstag und Bekanntmachung des Hinweises auf die Patenterteilung: **15.05.2013**
(21) Anmeldenummer: 04715884.5
(22) Anmeldetag: 01.03.2004
(51) Int. Cl.: F03H 1/00, B64G 1/40, H05H 1/54

(54) **ANTRIEBSVORRICHTUNG EINES RAUMFLUGKÖRPERS UND VERFAHREN ZUR LAGESTEUERUNG EINES RAUMFLUGKÖRPERS MIT EINER SOLCHEN ANTRIEBSVORRICHTUNG**
ION THRUSTER PERTAINING TO A SPACECRAFT AND METHOD FOR CONTROLLING THE POSITION OF A SPACECRAFT COMPRISING ONE SUCH ION THRUSTER
DISPOSITIF DE PROPULSION D'UN ENGIN DE VOL SPATIAL ET PROCEDE POUR CONTROLER LA POSITION D'UN ENGIN SPATIAL COMPRENANT LEDIT DISPOSITIF DE PROPULSION

(30) Priorität: 05.03.2003 DE 10309457; 26.04.2003 DE 10318925
(43) Veröffentlichungstag der Anmeldung: 14.12.2005
(73) Patentinhaber: Thales Air Systems & Electron Devices GmbH, 89077 Ulm (DE)
(72) Erfinder: KORNFELD, Günter, 89275 Elchingen (DE); KOCH, Norbert, 89073 Ulm (DE); COUSTOU, Gregory, 45640 Sandillon (FR)
(74) Vertreter: Baur & Weber Patentanwälte
(86) Internationale Anmeldenummer: PCT/EP2004/002013
(87) Internationale Veröffentlichungsnummer: WO 2004/079188

(56) Entgegenhaltungen:
- WO-A-00/01206
- WO-A-01/71185
- WO-A-2004/064459
- GB-A- 2 358 043

## Beschreibung

Die Erfindung betrifft eine Antriebsvorrichtung eines Raumflugkörpers mit einer Ionenbeschleuniger-Anordnung sowie ein Verfahren zur Lagesteuerung eines Raumflugkörpers mit einer solchen Antriebsvorrichtung.

Bei Raumflugkörpern wie insbesondere Satelliten sind zur Einhaltung, Ausrichtung, Position oder Bahn Korrekturen erforderlich. Hierzu enthalten die Raumflugkörper typischerweise Ionenbeschleuniger-Anordnungen, welche in einer lonisationskammer ein neutrales Arbeitsgas ionisieren und die positiv geladenen Gasionen in Richtung eines Strahlausgangs der Ionisationskammer beschleunigen und ausstoßen.

Ionenbeschleuniger-Anordnungen sind insbesondere in Hall-Konfiguration oder als Gitter-Beschleuniger bekannt. Aus der DE 198 28 704 A1 und der DE 101 30 464 A1 ist eine Beschleuniger-Anordnung mit einer besonderen Magnetfeldverteilung in der Ionisationskammer bekannt. Bei derartigen Antriebsvorrichtungen in Raumflugkörpern besteht, im Unterschied zu z. B. in Labors wissenschaftlich genutzten Ionenbeschleunigern das Problem, dass den Ionen am Strahlausgang Elektronen zur Ladungsneutralisierung des ausgestoßenen Teilchenstroms zuzufügen sind, um eine Verminderung der Ionisation des Arbeitsgases und/oder einem Abfall des Rückstoßimpulses vorzubeugen, welche insbesondere durch Raumladungseffekte erklärbar sind. Die hierfür eingesetzten Primärelektronenquellen dienen, soweit keine Hochfrequenz-Gasionisation vorgesehen ist, typischerweise auch noch als Primärelektronenquellen für die Ionisation des Arbeitsgases in der Ionisationskammer.

Als Quellen für Elektronen zur Ionisation des Arbeitsgases und/oder Neutralisierung des ausgestoßenen lonenstrahls sind unterschiedliche Realisierungsformen bekannt. Aus der US 3 956 666 ist eine Gitter-lonenbeschleuniger-Anordnung bekannt, bei welcher außerhalb der Ionisationskammer in Strahlrichtung des lonenstrahls eine geheizte Kathode als Neutralisator angeordnet ist. Eine weitere Kathode zur Emission von Primärelektronen für die Ionisation des Arbeitsgases ist in der Ionisationskammer angeordnet.

Bei einer aus der US 3 735 591 bekannten Anordnung ist eine Kathode in Strahlrichtung auf der Längsachse der Ionisationskammer von dieser beabstandet angeordnet. Zum Start der Anordnung ist der Kathode ein Gas zur Erzeugung von Primärelektronen durch eine Gasentladung zugeführt. Im laufenden Betrieb werden aus der Kathode durch Ionenbombardement Elektronen gelöst.

Besonders gebräuchlich sind Anordnungen in Hall-Konfiguration mit einer ringförmigen Ionisationskammer und einer seitlich des Ausgangs angeordneten Neutralisator-Kathode, in welcher typischerweise auch eine Gasentladung erfolgt. Eine derartige Anordnung ist beispielsweise aus der US 5 359 258 bekannt.

Die DE-AS 12 22 589 beschreibt eine Anordnung, bei welcher ein extern erzeugter Strahl hoch beschleunigter Elektronen in eine Ionisationskammer eingeleitet und dort in einem im wesentlichen homogenen zur Längsachse parallelen Magnetfeld geführt ist. Ein Teil der Elektronen tritt mit den Ionen auf der Ausgangsseite der Ionisationskammer durch eine Elektrodenblende aus, so dass ein elektrisch neutraler Plasmastrahl abgegeben wird.

Eine Anordnung mit einem extern erzeugten und in eine Ionisationskammer eingeleiteten und zur Neutralisierung des Ionenstrahls dienenden Elektronenstrahl ist auch aus der DE 198 28 704 A1 bekannt, bei welcher ein permanentperiodisches Magnetfeld in der Ionisationskammer in Verbindung mit einem die Ionisationskammer durchsetzenden elektrostatischen, positiv geladene Ionen zum Ausgang hin beschleunigenden Feld eine mehrstufige Anordnung bildet. Eine ähnliche Feldkonfiguration liegt auch bei einer aus der DE 101 30 464 A1 bekannten Anordnung vor, bei welcher als Elektronenquelle eine Elektrode am ausgangsseitigen Ende der lonisationskammer vorgesehen ist, welche im Randbereich des lonenstrahls durch aufprallende Ionen Elektronen für die Gasionisation und die Neutralisierung des lonenstrahls freisetzt. In der WO 01/71185 ist eine ringförmige Plasmakammer mit einer permanent-periodischen Magnetanordnung kombiniert.

Die GB 2 358 043 A beschreibt eine Antriebsvorrichtung eines Raumflugkörpers, bei welcher ein kostengünstiges Treibgas negativ aufgeladen und elektrostatisch oder magnetisch ausgestoßen wird. Eine Neutralisatorelektrode wird nicht benötigt, da zur Neutralisierung Elektronen aus der Raumumgebung angezogen werden. Das Treibgas muss zur Bildung negativ geladener Ionen geeignet sein.

Der vorliegenden Erfindung liegt die Aufgabe zugrunde, eine weiter vereinfachte und effektive Antriebsvorrichtung für einen Raumflugkörper mit einer Ionenbeschleuniger-Anordnung sowie ein Verfahren zur Steuerung eines Raumflugkörpers mittels einer solchen Antriebsvorrichtung anzugeben.

Die Erfindung ist im unabhängigen Anspruch beschrieben. Die abhängigen Ansprüche enthalten vorteilhafte Ausgestaltungen und Weiterbildungen der Erfindung.

Die Erfindung macht Gebrauch von der an sich aus der DE 101 30 464 A1 oder aus der DE 198 28 704 A1 bekannten Feldkonfiguration mit einem innerhalb der Ionisationskammer in Längsrichtung Ionen beschleunigenden elektrostatischen Feld einer Elektrodenanordnung und eine Magnetanordnung nach Art der permanent-periodischen Magnetanordnungen aus Lauffeldröhren.

Die Elektrodenanordnung erzeugt zwischen einer am oder beim Strahlausgang der Ionisationskammer liegenden Kathodenelektrode und einer dieser in Längsrichtung abgewandten, vorzugsweise in der Ionisationskammer, insbesondere am dem Strahlausgang entgegengesetzten Ende der lionisationskammer befindlichen Anodenelektrode ein im wesentlichen in Längsrichtung der Ionisationskammer gerichtetes elektrostatisches Feld. Als Längsrichtung sei die zwischen den seitlichen Begrenzungen zum Ausgang der Ionisationskammer weisende und im wesentlichen zu der mittleren Strahlrichtung des abgegebenen lonenstrahls parallele Richtung bezeichnet. Die Kathodenelektrode ist vorzugsweise den Ausgang der Ionisationskammer seitlich umgebend und außerhalb der Ionisationskammer liegend ausgebildet. Die Elektrodenanordnung kann im Längsverlauf der Ionisationskammer zusätzliche Zwischenelektroden in an sich aus dem genannten Stand der Technik bekannter Art aufweisen.

Wesentlich ist die in Längsrichtung mehrstufige Ausbildung des Magnetfelds innerhalb der Ionisationskammer mit alternierend in Längsrichtung entgegen gesetzt gerichteten Magnetfeldabschnitten, wobei sich Magnetfeldabschnitte erster Art mit überwiegend zur Längsrichtung senkrechtem Feldverlauf und Magnetfeldabschnitte zweiter Art mit überwiegend zur Längsrichtung senkrechtem Feldverlauf abwechseln und durch einen Magnetfeldabschnitt zweier Art getrennt benachbarte Magnetfeldabschnitte erster Art in Längsrichtung entgegengesetzt gerichtete Feldkomponenten aufweisen. Das derartige Magnetfeld wird aufgrund des Feldverlaufs in einer die Mittellängsachse enthaltenden Schnittebene als mehrstufige Cusp-Struktur bezeichnet. Die Ionisationskammer weist vorzugsweise im Querschnitt senkrecht zur Längsachse eine einfach zusammenhängende Querschnittsfläche, insbesondere eine Kreisfläche auf, kann aber auch einen ringförmigen Querschnitt besitzen. Die typischerweise außerhalb der seitlichen Begrenzung der Ionisationskammer liegende Magnetanordnung weist in Längsrichtung im Bereich der Magnetfeldabschnitte zweiter Art Magnetpole mit in Längsrichtung alternierender Polarität auf. Die Magnetpole halten vorzugsweise die Ionisationskammer umschlossen. Die Magnetanordnung kann durch Spulen oder vorzugsweise durch Permanentmagnete gebildet sein.

Es zeigt sich überraschenderweise, dass mit der Kombination der vorstehend geschilderten Konfigurationen von elektrostatischen und magnetischen Feld in der Plasmakammer eine Antriebsvorrichtung in einem freifliegenden Raumflugkörper ohne separate Elektronenquelle zur Erzeugung von Primärelektronen für die Ionisation des Arbeitsgases und/oder die Neutralisation des abgegebenen lonenstrahls arbeitet, was insbesondere auf die raumladungsausgleichende Felderkonfiguration innerhalb der lonisationskammer rückführbar ist. Durch den Wegfall der separaten Elektrodenquelle kann die Antriebsvorrichtung wesentlich vereinfacht werden.

Der von der erfindungsgemäßen Antriebsvorrichtung abgegebene Ionenstrom ist daher typischerweise nicht neutralisiert und weist vorzugsweise einen positiven Strom im Umfang von wenigstens 50 %, insbesondere wenigstens 75 %, vorzugsweise wenigstens 90% nicht durch mit ausgestoßene Elektronen neutralisierter bzw. ladungskompensierter positiver Ionen bezogen auf die Gesamtheit der Atome in dem abgegebenen Strom auf.

Zum Ladungsausgleich des Raumflugkörpers enthält dieser vorteilhafterweise mehrere der Umgebung zuweisende leitende Flächen, welche mit der Elektrodenanordnung direkt oder unter Zwischenschaltung weiterer Komponenten elektrisch verbunden sind. Über diese leitenden Flächen können vorteilhafterweise positiv geladene Partikel aus der Umgebung des Raumflugkörpers angezogen und zum Ladungsausgleich verwandt werden, wobei sich günstigerweise die Bilanz der Partikelströme aus der Umgebung und des Ionenstrahls der Antriebsvorrichtung automatisch ausgleichen. Die leitenden Flächen können insbesondere auch auf dem Potential der Kathode der Antriebsvorrichtung liegen.

Die leitenden Flächen können insbesondere Teile der Außenwand des Raumflugkörpers sein und können auch eine zusammenhängende Fläche bilden. Die leitenden Flächen sind vorteilhafterweise wenigstens in Teilflächenabschnitten mit ihren der Umgebung zuweisenden Flächennormalen um wenigstens 90° gegen die mittlere Strahlrichtung des von der Antriebsvorrichtung ausgestoßenen Strahls versetzt ausgerichtet. Bei statistisch im wesentlichen gleichmäßig über die Außenfläche des Raumflugkörpers verteilten leitenden Flächen mitteln sich die Einzelimpulse der aus der Umgebung elektrostatisch angezogenen und auf die leitenden Flächen auftreffenden geladenen Partikel in der Richtung aus.

Die Erfindung ist insbesondere vorteilhaft verwendbar für in geringer (Low Earth Orbit, LEO) oder mittlerer Höhe (Medium Earth Orbit, MEO) fliegende Satelliten.

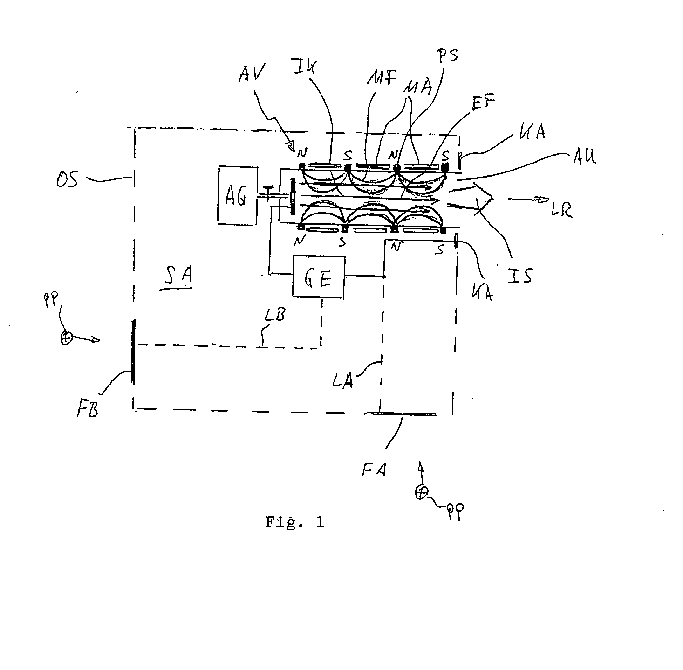

In der Abbildung ist schematisch mit SA allgemein ein Satellit als Raumflugkörper bezeichnet, der eine nach außen weisende, im Regelfall komplex geformte Fläche OS besitzt. An dem Satelliten können zusätzlich außen liegende Vorrichtungen wie z. B. Antennen oder Solarzellenträger angeordnet sein. Der rechteckige Umriss in der Abbildung ist daher nur als alle Formen schematisch repräsentierend anzusehen.

In bzw. an dem Satelliten sind, insbesondere für Lagekorrekturen typischerweise mehrere Antriebsvorrichtungen AV in Form von lonenbeschleunigeranordnungen mit unterschiedlichen Ausrichtungen vorgesehen, von denen eine in der Abbildung eingezeichnet ist.

Die Ionenbeschleunigeranordnung enthält in an sich gebräuchlicher Weise eine Ionisationskammer IK, in welcher ein statisches Magnetfeld und ein statisches elektrisches Feld vorliegen. Das statische elektrische Feld ist durch eine Elektrodenanordnung mit einer in der lonisationskammer, insbesondere bei deren dem Strahlausgang AU abgewandten Ende angeordneten Anode AN und einer beim Strahlausgang AU, insbesondere außerhalb der Ionisationskammer liegenden und vorteilhafterweise den Strahlausgang ringförmig umgebenden Kathode erzeugt und verläuft innerhalb der Ionisationskammer im wesentlichen von der Anode zum Strahlausgang gerichtet. Das elektrostatische Feld EF ist in der Abbildung vereinfacht durch mehrere zur Längsrichtung der lonisationskammer parallele Feldlinien angedeutet. Ein Hochspannungsgenerator GE erzeugt eine Spannung zwischen Kathode KA und Anode AN, welche typischerweise zwischen 300 V und 2000 V liegt. Aus einem Vorratsbehälter wird dosiert ein Arbeitsgas AG in die Ionisationskammer geleitet, welches dort durch Stoßionisation mit Elektronen ionisiert wird. Das elektrostatische Feld EF ist so gerichtet, dass die positiv geladenen Gasionen elektrostatisch in Richtung des Strahlausgangs AU der Ionisationskammer beschleunigt und als gerichteter divergierender Ionenstrahl IS ausgestoßen werden. Ein statisches Magnetfeld in der Ionisationskammer zwingt die Elektronen auf Driftbahnen und erhöht deren Aufenthaltsdauer und damit auch die loniationswahrscheinlichkeit. Die Elektrodenanordnung kann zusätzlich zu Anode AN und Kathode KA weitere Elektroden auf Zwischenpotentialen enthalten.

Typische derartige Antriebsvorrichtungen in Raumflugkörpern sehen beim Ausgang der lonisationskammer als wesentliches Element eine Elektronenquelle als Neutralisierer vor, aus welcher dem Ionenstrahl IS nach unterschiedlichen Mechanismen Elektronen zugesetzt werden. Auf einen solchen Neutralisierer wird bei der der vorliegenden Erfindung bewußt verzichtet und der ausgestoßene Ionenstrahl wird mit einem starken positiven Stromüberschuss bezüglich der von der Antriebsvorrichtung in den freien Raum emittierten Partikel abgegeben, wobei der Ladungsüberschuss vorteilhafterweise wenigstens 50 %, insbesondere wenigstens 75 %, vorzugsweise wenigstens 90 % der ausgestoßenen Atome als nicht durch mit ausgestoßene Elektroden stromkompensierte Ionen beträgt. Auch andere Maßnahmen zur Generierung von Neutralisierungselektronen wie z. B. Einleitung eines Elektronenstrahles von der Anode her oder Ionenbombardement einer metallischen Oberfläche sind bewusst nicht vorgesehen. Von wesentlicher Bedeutung für die Funktion erweist sich die Form des Magnetfelds MF in der Plasmakammer, welches in Längsrichtung LR mehrstufig in der Art ausgebildet ist, dass eine die Ionisationskammer umgebende Magnetanordnung in Längsrichtung beabstandet alternierende Magnetpole N, S aufweist, wobei sich senkrecht zur Längsrichtung jeweils gleiche Pole gegenüberstehen bzw. einheitliche Pole die lonisationskammer ringförmig umgeben. Das Magnetfeld in der Ionisationskammer zeigt in einem Längsschnitt durch die Ionisationskammer wie in der Abbildung skizziert, eine periodische Struktur mit überwiegend parallel zur Längsrichtung LR verlaufenden Magnetfeld zwischen beabstandeten Polen N, S und einem überwiegend radialen Verlauf im Bereich der Pole. Der charakteristische Feldverlauf der einzelnen Stufen im Längsschnittbild wird auch als cusp-Struktur bezeichnet. Die Magnetfeldstruktur ist an sich bekannt, z B. aus der DE 198 28 704 A1 oder der DE 101 30 464 A1, wobei aber bei beiden bekannten Anordnungen Mittel zur gezielten Zufügung von neutralisierenden Elektronen zu dem ausgestoßenen Ionenstrahl vorgesehen sind. Bei der Anordnung aus der DE 198 28 704 A1 wird ein beschleunigter gebündelter Elektronenstrahl auf der Anodenseite in die lonisationskammer eingeleitet und in dem Magnetfeld zumindest in Teilen bis zum Strahlausgang der Ionisationskammer geführt. Bei der DE 101 30 464 A1 erfolgt eine Neutralisierung des abgegebenen lonenstrahls mittels einer seitlich des Strahlausgangs angeordneten Elektronenquelle und/oder mittels einer von einem Randbereich des lonenstrahls beim Strahlausgang angeordneten Emissionsfläche, aus welcher durch auftreffende Ionen Elektronen ausgelöst werden.

Da einerseits die Kathode KA keine Elektroden zur Neutralisierung des gerichtet ausgestoßenen lonenstrahls IB emittiert, andererseits aber Elektronen in der Ionisationskammer auf die Anode AN auftreffen ergibt sich ein Ungleichgewicht in der Strombilanz des Generators zwischen Anodenstrom und Kathodenstrom, welche bei der vorliegenden Erfindung vorteilhafterweise dadurch ausgeglichen wird, dass über leitende Außenflächen des Satelliten positiv geladene Partikel PP, insbesondere Gasionen oder Protonen aus der Umgebung des Satelliten angezogen und neutralisiert werden. In der Abbildung sind solche leitende Flächen FA, FB von der Kathode KA beabstandet an der Außenfläche OS des Satelliten vorgesehen. Die zum Stromausgleich erforderliche Potentialdifferenz zwischen der Umgebung des Satelliten und den leitenden Flächen FA, FB, OS stellt sich selbsttätig als Funktion insbesondere der leitenden Flächen, der Dichte und Temperatur der umgebenden geladenen Partikel, der Geschwindigkeit des Satelliten sowie der Größe des den Satelliten verlassenden Ionenstroms ein. Für eine effiziente Nutzung des erfindungsgemäßen Konzepts der Ionenantriebsvorrichtung ohne Neutralisierkathode ist vorteilhafterweise diese Potentialdifferenz <20 % der Potentialdifferenz zwischen Anode und Kathode der Beschleunigeranordnung. Vorteilhafterweise ist die Aufprallgeschwindigkeit von Umgebungspartikeln auf die leitenden Flächen gering. Die Antriebsvorrichtung findet insbesondere vorteilhaft Verwendung in Satelliten in niedrigen (Low Earth Orbit) oder mittleren (Medium Earth Orbit) Umlaufbahnen.

Da ein Satellit typischerweise eine in weiten Teilen metallische Außenhaut aufweist, können als leitende Flächen vorteilhaft vorhandene Flächen verwandt werden, welche elektrisch mit dem Generator verbunden werden wie z. B. die Fläche FB über die Verbindung LB oder vorzugsweise unmittelbar auf Kathodenpotential gelegt sind wie z. B. die Fläche FA über die Verbindung LA. Insbesondere die letztgenannte Variante ist von besonderem Vorteil, da ohnehin leitend verbundene Teile der Außenfläche OS ohne Zusatzaufwand verwandt werden können und für alle der mehreren Ionenbeschleunigeranordnungen des Satelliten gemeinsam zur Verfügung stehen. Die leitenden Flächen sind vorteilhafterweise über den Außenumfang des Satelliten verteilt angeordnet und vorzugsweise in unterschiedliche Richtungen, insbesondere zumindest teilweise in entgegen gesetzte Richtungen ausgerichtet.

Auf die leitenden Flächen auftreffende positiv geladene Partikel PP nehmen Elektronen auf und gleichen so die Strombilanz des Generators GE aus. Schwankungen und temporäre Ungleichgewichte bleiben ohne nennenswerten Einfluss auf die Ionisation und die Ionenbeschleunigung in der lonisationskammer.

Die vorstehend und die in den Ansprüchen angegebenen sowie die den Abbildungen entnehmbaren Merkmale sind sowohl einzeln als auch in verschiedener Kombination vorteilhaft realisierbar. Die Erfindung ist nicht auf die beschriebenen Ausführungsbeispiele beschränkt, sondern im Rahmen fachmännischen Könnens in mancherlei Weise abwandelbar.

## Patentansprüche

1. Antriebsvorrichtung eines Raumflugkörpers mit wenigstens einer lonenbeschleuniger-Anordnung, welche
a) eine Ionisationskammer (IK) mit einem in einer Längsrichtung (LR) liegenden Ausgang (AU) für einen Strahl (15) positiv geladener beschleunigter Ionen,
b) eine Elektrodenanordnung mit einer innerhalb der lonisationskammer liegenden Anode (AN) und einer am Strahlausgang oder seitlich davon beabstandet außerhalb der Ionisationskammer liegenden Kathode (KA) zur Erzeugung eines elektrostatischen Beschleunigungsfelds (EF) für positiv geladene Ionen innerhalb der Ionisationskammer,
c) eine Magnetanordnung mit mehreren in Längsrichtung beabstandeten alternierenden Magnetpolen, welche innerhalb der lonisationskammer ein Magnetfeld (MF) mit ersten Abschnitten überwiegend zur Längsrichtung parallelem Feldverlauf zwischen den Magnetpolen und zweiten Abschnitten überwiegend zur Längsrichtung senkrechten Feldverlaufs im Bereich der Magnetpole erzeugt,
umfasst, **dadurch gekennzeichnet, daß**
keine beim Ausgang oder außerhalb der Ionisationskammer liegende Elektronenquelle zur Abgabe von Elektronen an den Ionenstrahl vorgesehen ist,
- die Elektrodenanordnung elektrisch mit mehreren von dem Ausgang der Ionisationskammer beabstandeten und der Umgebung des Raumflugkörpers zuweisenden leitenden Flächen (FA, FB) verbunden ist, wobei mehrere leitende Flächen oder Teilflächen mit unterschiedlich ausgerichteten Flächennormalen vorhanden sind.

2. Vorrichtung nach Anspruch 1, **dadurch gekennzeichnet, dass** die leitenden Flächen einen Teil der Außenwand (OS) des Raumflugkörpers bilden.

3. Vorrichtung nach Anspruch 1 oder 2, **dadurch gekennzeichnet, dass** die leitenden Flächen auf dem Potential der Kathode liegen.

4. Vorrichtung nach einem der Ansprüche 1 bis 3, **dadurch gekennzeichnet, dass** der Querschnitt der Ionisationskammer senkrecht zur Längsrichtung eine einfach zusammenhängende Fläche, insbesondere eine Kreisfläche bildet.

5. Vorrichtung nach einem der Ansprüche 1 bis 4, **dadurch gekennzeichnet, dass** wenigstens zwei Magnetpole alternierend beabstandet im Längsverlauf der Ionisationskammer vorliegen.

6. Vorrichtung nach einem der Ansprüche 1 bis 5, **dadurch gekennzeichnet, dass** in dem den Raumflugkörper gerichtet verlassenden Ionenstrom wenigstens 50 %, insbesondere wenigstens 75 %, vorzugsweise wenigstens 90 % der Atome nicht ladungskompensiert sind.

7. Vorrichtung nach einem der Ansprüche 1 bis 6, **dadurch gekennzeichnet, dass** der Raumflugkörper ein Low-Earth-Orbit- oder Medium-Earth-Orbit-Satellit ist.

## Claims

1. Drive apparatus for a spacecraft having at least one ion-accelerator arrangement, which comprises
a) an ionization chamber (IK) having an exit (AU), located in a longitudinal direction (LR), for a beam (15) of positively charged accelerated ions,
b) an electrode arrangement having an anode (AN), located inside the ionization chamber, and a cathode (KA), located outside the ionization chamber at the beam exit or laterally spaced apart therefrom, for producing an electrostatic acceleration field (EF) for positively charged ions within the ionization chamber,
c) a magnet arrangement having a plurality of alternating magnetic poles spaced apart in the longitudinal direction, which magnet arrangement produces, inside the ionization chamber, a magnetic field (MF) having first portions with a field distribution between the magnetic poles that is predominantly parallel to the longitudinal direction and second portions with a field distribution in the region of the magnetic poles that is predominantly perpendicular to the longitudinal direction,
**characterized in that**
an electron source for emitting electrons to the ion beam is not provided at the exit or outside the ionization chamber,
- the electrode arrangement is electrically connected to a plurality of conductive surfaces (FA, FB) which are spaced apart from the exit of the ionization chamber and face the surroundings of the spacecraft, wherein a plurality of conductive surfaces or partial surfaces with differently aligned surface normals are present.

2. Apparatus according to Claim 1, **characterized in that** the conductive surfaces form part of the external wall (OS) of the spacecraft.

3. Apparatus according to Claim 1 or 2, **characterized in that** the conductive surfaces are at the potential of the cathode.

4. Apparatus according to one of Claims 1 to 3, **characterized in that** the cross section of the ionization chamber perpendicular to the longitudinal direction forms a simple contiguous area, in particular a circular area.

5. Apparatus according to one of Claims 1 to 4, **characterized in that** at least two magnetic poles are present in alternating fashion spaced apart in the longitudinal extent of the ionization chamber.

6. Apparatus according to one of Claims 1 to 5, **characterized in that** at least 50%, in particular at least 75%, preferably at least 90%, of the atoms in the ion beam leaving the spacecraft in a targeted manner are not charge-compensated.

7. Apparatus according to one of Claims 1 to 6, **characterized in that** the spacecraft is a low-Earth-orbit or medium-Earth-orbit satellite.

## Revendications

1. Ensemble d'entraînement pour spationef doté d'au moins un système d'accélérateur d'ions qui comporte
a) une chambre d'ionisation (IK) dotée d'une sortie (AU) située dans le sens de la longueur (LR) pour un faisceau (15) d'ions chargés positivement et accélérés,
b) un système d'électrodes doté d'une anode (AN) située à l'intérieur de la chambre d'ionisation et d'une cathode (KA) située à la sortie du faisceau ou sur le côté de celle-ci et à distance à l'extérieur de la chambre d'ionisation, pour former un champ d'accélération électrostatique (EF) des ions chargés positivement à l'intérieur de la chambre d'ionisation,
c) un système d'aimant doté de plusieurs pôles magnétiques alternés et disposés à distance les uns des autres ou dans le sens de la longueur, formant à l'intérieur de la chambre d'ionisation un champ magnétique (MF) qui présente des premières parties de champ principalement parallèles au sens de la longueur entre les pôles magnétiques et des deuxièmes parties de champ principalement perpendiculaires au sens de la longueur au niveau des pôles magnétiques,
**caractérisé en ce qu'**aucune source d'électrons délivrant des électrons au faisceau d'ions n'est prévue à la sortie ou à l'extérieur de la chambre d'ionisation,
- le système d'électrodes est relié électriquement à plusieurs surfaces conductrices (FA, FB) disposées à distance les unes des autres à la sortie de la chambre d'ionisation et tournées vers l'environnement du spationef, plusieurs surfaces conductrices ou parties de surfaces conductrices étant prévues avec leurs normales à la surface orientées différemment.

2. Ensemble selon la revendication 1, **caractérisé en ce que** les surfaces conductrices forment une partie de la paroi extérieure (OS) du spationef.

3. Ensemble selon les revendications 1 ou 2, **caractérisé en ce que** les surfaces conductrices sont placées au potentiel de la cathode.

4. Ensemble selon l'une des revendications 1 à 3, **caractérisé en ce que** la section transversale de la chambre d'ionisation perpendiculairement au sens de la longueur forme une surface unitaire continue, en particulier une surface circulaire.

5. Ensemble selon l'une des revendications 1 à 4, **caractérisé en ce qu'**au moins deux pôles magnétiques sont prévus en alternance et à distance l'un de l'autre dans le sens de la longueur de la chambre d'ionisation.

6. Ensemble selon l'une des revendications 1 à 5, **caractérisé en ce que** dans le courant ionique qui quitte de manière orientée le spationef, au moins 50 %, en particulier au moins 75 % et de préférence au moins 90 % des atomes ne sont pas compensés en termes de charge.

7. Ensemble selon l'une des revendications 1 à 6, **caractérisé en ce que** le spationef est un satellite terrestre en orbite basse ou un satellite terrestre en orbite moyenne.
